# EUROPÄISCHE PATENTSCHRIFT

(11) **EP 3 489 414 B1**
(45) Veröffentlichungstag und Bekanntmachung des Hinweises auf die Patenterteilung: **30.12.2020**
(21) Anmeldenummer: 18203929.7
(22) Anmeldetag: 01.11.2018
(51) Int. Cl.: E01C 19/00

(54) **SELBSTFAHRENDE BAUMASCHINE UND VERFAHREN ZUM STEUERN EINER SELBSTFAHRENDEN BAUMASCHINE**
SELF-PROPELLED CONSTRUCTION MACHINE AND METHOD FOR CONTROLLING THE SAME
ENGIN DE CONSTRUCTION ET PROCÉDÉ DE COMMANDE D'UN ENGIN DE CONSTRUCTION

(30) Priorität: 12.11.2017 DE 102017010425
(43) Veröffentlichungstag der Anmeldung: 29.05.2019
(73) Patentinhaber: Wirtgen GmbH, 53578 Windhagen (DE)
(72) Erfinder: Fritz, Matthias, 53773 Hennef (DE); LENZ, Martin, 56276 Grossmaischeid (DE); BARIMANI, Cyrus, 53639 Königswinter (DE)
(74) Vertreter: Oppermann, Frank

(56) Entgegenhaltungen:
- EP-A1- 2 719 829
- EP-B1- 1 103 659
- DE-A1- 19 755 324

## Beschreibung

Die Erfindung betrifft eine selbstfahrende Baumaschine, insbesondere einen Gleitschalungsfertiger, und ein Verfahren zum Steuern einer selbstfahrenden Baumaschine.

Die selbstfahrenden Baumaschinen zeichnen sich dadurch aus, dass sie über eine an einem Maschinenrahmen angeordnete Arbeitseinrichtung zur Errichtung von Baukörpern auf einem Gelände oder zum Verändern des Geländes verfügen. Zu den bekannten selbstfahrenden Baumaschinen gehören beispielsweise Gleitschalungsfertiger oder Straßenfräsmaschinen.

Bei den Gleitschalungsfertigern umfasst die Arbeitseinrichtung eine Vorrichtung zum Formen von fließfähigem Material, insbesondere Beton, die nachfolgend als Betonmulde bezeichnet wird. Mit der Betonmulde können Baukörper unterschiedlicher Ausbildung, beispielsweise Betonschutzwände oder Verkehrsinseln hergestellt werden. Ein Gleitschalungsfertiger ist beispielsweise in der EP 1 103 659 B1 beschrieben.

Bei der Arbeitseinrichtung der Straßenfräsmaschinen handelt es sich um eine Fräseinrichtung, die eine mit Fräs- oder Schneidwerkzeugen bestückte Fräs-/Schneidwalze aufweist, mit der vom Gelände Material in einer vorgegebenen Arbeitsbreite abgetragen werden kann.

Die selbstfahrenden Baumaschinen verfügen weiterhin über eine Antriebseinrichtung zum Ausführen von translatorischen und/oder rotatorischen Bewegungen der Baumaschine in dem Gelände sowie eine Steuereinheit zum Steuern der Antriebseinrichtung.

Zur Errichtung von Baukörpern auf dem Gelände oder zum Verändern des Geländes wird bei selbstfahrenden Baumaschinen eine weitgehend automatische Steuerung der Baumaschine ohne nennenswerte Eingriffe des Fahrzeugführers angestrebt. Bei der automatischen Steuerung der Baumaschine wird die Antriebseinrichtung der Baumaschine derart gesteuert, dass sich ein Referenzpunkt auf der Baumaschine entlang einer vorgegebenen Soll-Wegstrecke, d. h. auf der Wegstrecke oder in einem vorgegebenen Abstand zur Wegstrecke bewegt, um einen Baukörper zu errichten oder das Gelände zu verändern. Dabei kann die Soll-Wegstrecke durch einzelne Segmente beschrieben werden, die Geraden oder Kurven sein können.

Ein bekanntes Verfahren zum Steuern von selbstfahrenden Baumaschinen setzt den Einsatz eines Leitdrahtes voraus, mit dem die Soll-Wegstrecke oder eine Äquidistante zu der Soll-Wegstrecke vorgegeben wird.

Selbstfahrende Baumaschinen können auch unter dem Einsatz einer Totalstation zur Positionsbestimmung oder eines GNSS-Systems (Globales Navigationssatellitensystem) gesteuert werden. Für die automatische Steuerung der Baumaschine werden die Soll-Wegstrecke in dem Gelände beschreibende Daten ermittelt. Diese Daten können Koordinaten in einem von der Baumaschine unabhängigen zwei- oder dreidimensionalen Koordinatensystem sein. Die Ermittlung der Daten kann mit einem Computer in einem Büro abseits der Baustelle erfolgen. Während des Betriebs der Baumaschine erfolgt der permanente Abgleich zwischen der tatsächlichen Position der Baumaschine bzw. deren Arbeitseinrichtung und der gewünschten Position, so dass sich die Baumaschine bzw. deren Arbeitseinrichtung entlang der Soll-Wegstrecke bewegt.

Bei einem Gleitschalungsfertiger beispielsweise soll sich die Betonmulde entlang einer in der Planung vorgegebenen Soll-Wegstrecke bewegen, um beispielsweise eine Betonschutzwand auf der Geländeoberfläche zu errichten. Dabei ist nicht nur die Bewegung eines Referenzpunktes auf der Baumaschine bzw. deren Arbeitseinrichtung in der Ebene, sondern auch eine Veränderung der Höhe des Referenzpunktes zu berücksichtigen, beispielsweise ist bei einem Gleitschalungsfertiger die Höhe der Betonmulde über der Geländeoberfläche zur Festlegung der Einbauhöhe einzustellen. Analog gilt dies auch für die Straßenfräsmaschine.

Der Referenzpunkt der Baumaschine sollte während des Vorschubs eine möglichst gleichmäßige Bewegung im Raum ausführen. Wenn die Steuerung der Baumaschine mit einem Leitdraht erfolgt, wird der Leitdraht auf der Trasse unter Berücksichtigung der lokalen Gegebenheiten oder Zwangspunkten, beispielsweise Wassereinläufe, gespannt. Zum Spannen des Leitdrahtes werden im Gelände Halterungen gesetzt, an denen der Leitdraht befestigt wird. Die Halterungen sollten so gesetzt werden, dass sich der Leitdraht ohne Knickstellen spannen lässt. Die Verwendung eines Leitdrahtes hat den Vorteil, dass dessen Verlauf auf der Baustelle leicht kontrolliert und durch Umsetzen der Halterungen korrigiert werden kann. Auf der Baustelle können beim Abschreiten der Trasse Knickstellen leicht erkannt werden, da sich der Verlauf des Leitdrahtes mit dem Auge leicht erfassen lässt (eye balling). Die Vermeidung von Knickstellen führt dazu, dass die Baumaschine oder deren Arbeitseinrichtung eine gleichmäßige Bewegung ausführt.

Die Steuerung der Baumaschine mit einer Totalstation oder einem GNSS-System unter Verwendung eines digitalen Modells schließt eine einfache visuelle Kontrolle der vorgegebenen Wegstrecke auf Knickstellen aus, da die Wegstrecke nur durch Zahlenkolonnen beschrieben wird, denen eine Knickstelle nicht angesehen werden kann. Darüber hinaus erlauben die bekannten Steuerungen der Baumaschine mit einer Totalstation oder einem GNSS-System nicht die Bearbeitung bzw. Veränderung der zuvor erstellten und die Wegstrecke beschreibenden Daten. Daher besteht die Gefahr, dass die Bewegung der Baumaschine oder deren Arbeitseinrichtung nicht gleichmäßig ist. In der Praxis kann die Vorgabe der Wegstrecke dazu führen, dass an bestimmten Stellen der Wegstrecke die erforderliche Verstellung des Lenkwinkels der Laufwerke oder die Veränderung der Einstellung der Hubsäulen ein noch tolerierbares Maß übersteigt. Folglich kann nicht sichergestellt werden, dass das gewünschte Arbeitsergebnis erzielt wird.

Die EP 2 719 829 A1 beschreibt ein System, das eine Baumaschine und einen tragbaren Field-Rover umfasst. Die Baumaschine umfasst eine Arbeitseinheit zur Herstellung einer Struktur auf dem Boden, eine Antriebseinheit sowie eine Maschinen-Steuereinheit, um translatorische und/oder rotatorische Bewegungen der Baumaschine auf dem Boden zu steuern. Der Field-Rover weist eine Eingabeeinheit, eine Anzeigeeinheit und eine Recheneinheit auf und erlaubt die Bestimmung der Positionen von identifizierbaren Punkten einer vorgegebenen geometrischen Form in einem Referenzsystem, das unabhängig von der Position und Ausrichtung der Baumaschine ist. Eine besondere Ausführungsform sieht vor, dass eine bestimmte geometrische Form ausgewählt und in der Größe an die örtlichen Gegebenheiten angepasst werden kann.

Der Erfindung liegt die Aufgabe zugrunde, eine selbstfahrende Baumaschine, insbesondere einen Gleitschalungsfertiger, zu schaffen, mit der das gewünschte Arbeitsergebnis ohne größeren Aufwand einfach erzielt werden kann. Eine Aufgabe der Erfindung ist auch, eine selbstfahrende Baumaschine, insbesondere einen Gleitschalungsfertiger, zu schaffen, mit der sich ein verbessertes Arbeitsergebnis erzielen lässt. Eine weitere Aufgabe der Erfindung ist, in der Praxis eine gleichmäßige Bewegung der Baumaschine auch dann sicherzustellen, wenn die Steuerung der Maschine nicht mit einem Leitdraht erfolgen soll. Die Lösung dieser Aufgaben erfolgt erfindungsgemäß mit den Merkmalen der unabhängigen Patentansprüche. Die Gegenstände der abhängigen Ansprüche betreffen einzelne Ausführungsformen der Erfindung.

Die erfindungsgemäße selbstfahrende Baumaschine verfügt über einen Maschinenrahmen und eine Antriebseinrichtung zum Antreiben der Baumaschine. Die Baumaschine verfügt weiterhin über eine am Maschinenrahmen angeordnete Arbeitseinrichtung zur Errichtung von Baukörpern auf einem Gelände, beispielsweise eine Betonmulde, oder zum Verändern des Geländes, beispielsweise eine Fräs- oder Schneidwalze.

Unter einer Antriebseinrichtung werden nachfolgenden sämtliche Bauteile oder Baugruppen (Aggregate) der Baumaschine verstanden, die dem Fortbewegen der Baumaschine im Gelände dienen. Zu diesen Bauteilen oder Aggregaten zählen nicht nur die Laufwerke, beispielsweise Kettenlaufwerke oder Räder, auf denen die Baumaschine aufsteht, und die Einrichtungen zum Antreiben der Laufwerke, beispielsweise hydraulische Motoren oder ein Verbrennungsmotor, sondern auch Einrichtungen zur Höhenverstellung des Maschinenrahmens bzw. der Arbeitseinrichtung in Bezug auf die Geländeoberfläche, beispielsweise Hubsäulen, an denen die Laufwerke befestigt sind. Diese Bauteile oder Aggregate der Antriebseinrichtung der Baumaschine erlauben eine Bewegung eines Referenzpunktes auf der Baumaschine entlang einer Wegstrecke, d. h. auf der Wegstrecke oder in einem vorgegeben Abstand zu der Wegstrecke (Äquidistante). Diese Wegstrecke kann eine Trajektorie im Raum oder der Ebene sein. Wenn die Trajektorie eine dreidimensionale Bahnkurve ist, können auch Höhenänderungen Berücksichtigung finden, beispielsweise die Einstellung der Höhe der Arbeitseinrichtung in Bezug auf die Geländeoberfläche.

Des Weiteren weist die Baumaschine eine Schnittstelle zum Einlesen von Daten auf, die eine Soll-Wegstrecke beschreiben, welche in der Planung abseits der Baustelle vorgegeben werden können. Die Daten können somit in einem Büro abseits der Baustelle ermittelt und dann über die Schnittstelle eingelesen werden. Die Soll-Wegstrecke kann in einem beliebigen Koordinatensystem beschrieben werden. Die Beschreibung der Soll-Wegstrecke kann auch mit einer Kilometrierung erfolgen.

Die Schnittstelle kann beispielsweise eine USB-Schnittstelle, eine Schnittstelle nach dem Bluetooth-Standard, eine Infrarot-Schnittstelle, ein LAN oder WLAN sein. Eine Schnittstelle kann aber auch mit einem Daten-Laufwerk geschaffen werden, um die Daten mit einem beliebigen Datenträger einlesen zu können. Zum Speichern der über die Schnittstelle eingelesenen Daten, mit denen die Soll-Wegstrecke beschrieben wird, ist eine Speichereinheit vorgesehen. Die Speichereinheit kann beispielsweise der Arbeitsspeicher eines Computers, ein RAM (Random Access Memory) oder ein Flash-Speicher sein oder eine sonstige bekannte Form eines Speichers sein.

Darüber hinaus weist die Baumaschine eine Steuereinheit auf, die derart konfiguriert ist, dass sich ein Referenzpunkt auf der Baumaschine entlang einer Wegstrecke bewegt. Die Steuereinheit steuert die einzelnen Bauteile oder Aggregate der Antriebseinrichtung derart an, dass sich die Baumaschine entlang der vorgegebenen Wegstrecke bewegt, die beispielsweise durch kartesische Koordinaten in einem kartesischen Koordinatensystem oder Polarkoordinaten in einem Polarkoordinatensystem beschrieben werden kann. Die Steuereinheit kann Bestandteil einer zentralen Steuereinrichtung der Baumaschine sein, auf der ein Steuerungsprogramm läuft, um die einzelnen Bauteile oder Baugruppen der Baumaschine anzusteuern. Beispielsweise kann die Steuereinrichtung eine speicherprogrammierbare Steuerung (SPS) enthalten, die einen Mikrocontroller umfassen kann.

Die erfindungsgemäße Baumaschine zeichnet sich durch eine Wegstrecken-Modellierungseinrichtung aus, die eine Eingabeeinheit, eine Anzeigeeinheit und eine Recheneinheit umfasst. Die Recheneinheit der Wegstrecken-Modellierungseinrichtung kann Bestandteil einer zentralen Steuereinrichtung der Baumaschine oder eine selbständige Einheit sein.

Die Wegstrecken-Modellierungseinrichtung ist derart konfiguriert, dass aus den über die Schnittstelle eingelesenen Daten die Position zumindest einer Knickstelle auf der Soll-Wegstrecke bestimmt wird, sofern eine oder mehrere Knickstellen vorhanden sind und die Sollwegstrecke ohnehin nicht eine glatte Kurve ist. Unter Bestimmung der Position einer Knickstelle wird die Identifikation einer Knickstelle auf der Soll-Wegstrecke verstanden. Vorzugsweise werden zu Beginn des Bauvorhabens sämtliche Knickstellen auf der Soll-Wegstrecke identifiziert. Wenn sich die Soll-Wegstrecke aus mehreren Elementen, beispielsweise Geraden und Kurven zusammensetzt, sind die Berührungspunkte der einzelnen Elemente potentielle Knickstellen, die sich leicht identifizieren lassen. Es ist aber auch möglich, den Verlauf der Soll-Wegstrecke mit den bekannten mathematischen Verfahren auf das Vorhandensein von Knickstellen zu überprüfen.

Die Wegstrecken-Modellierungseinrichtung ist weiterhin derart konfiguriert, dass zumindest ein Teil der Soll-Wegstrecke angezeigt wird, in dem die Soll-Wegstrecke die Knickstelle hat. Die Anzeige zumindest des Teils der Soll-Wegstrecke erfolgt mit der Anzeigeeinheit. Vorzugsweise wird zu Beginn des Bauvorhabens zunächst der gesamte Verlauf der Soll-Wegstrecke angezeigt, der sämtliche Knickstellen umfasst, um später einzelne Abschnitte der Soll-Wegstrecke vom Benutzer auswählen zu können. Des Weiteren ist die Wegstrecken-Modellierungseinrichtung derart konfiguriert, dass in dem zumindest einen Teil der Soll-Wegstrecke ein Abschnitt der Wegstrecke von der Recheneinheit automatisch festgelegt wird oder vom Benutzer festgelegt werden kann, in dem die Soll-Wegstrecke die Knickstelle hat. Dies schließt aber nicht aus, dass in dem Abschnitt nicht auch weitere Knickstellen liegen können, wenn die Soll-Wegstrecke mehrere Knickstellen hat.

Wenn mehrere Knickstellen vorliegen, können die einzelnen Abschnitte der Reihe nach zur Anzeige gebracht werden. Für die einzelnen Abschnitte können Rahmen festgelegt werden, in denen die Soll-Wegstrecke modelliert werden kann. Die Rahmen können jeweils eine oder mehrere Knickstellen enthalten.

Die Wegstrecken-Modellierungseinrichtung erlaubt die Visualisierung bestimmter Stellen auf der Soll-Wegstrecke, die zu einer ungleichmäßigen Bewegung der Baumaschine führen würden. Folglich kann sich der Fahrzeugführer sofort ein Bild darüber verschaffen, ob Korrekturen der Wegstrecke erforderlich sind. Mit der Wegstrecken-Modellierungseinrichtung können einzelne Abschnitte der Soll-Wegstrecke dann derart modelliert werden, dass die Soll-Wegstrecke, die einzelne Segmente, wie Geraden und Kurven, aufweisen kann, im Wesentlichen knickfrei ist. Das Maß der tolerierten Abweichung von einer völlig knickfreien, d. h. glatten, Kurve kann der Benutzer selbst vorgeben.

Die Modellierung der Soll-Wegstrecke erfolgt mit der Wegstrecken-Modellierungseinrichtung computerunterstützt. Die Wegstrecken-Modellierungseinrichtung ist derart konfiguriert, dass für den Abschnitt der Soll-Wegstrecke, in dem die Soll-Wegstrecke die Knickstelle hat, eine im Wesentlichen knickfreie, vorzugsweise glatte, Interpolationskurve berechnet wird. Die Interpolationskurve sollte so beschaffen sein, dass auch die Übergänge in die Soll-Wegstrecke im Wesentlichen knickfrei sind, vorzugsweise völlig knickfrei sind. Für die Bestimmung der Interpolationskurve können sämtliche bekannten mathematischen Verfahren in der Recheneinheit implementiert sein. Die Interpolationskurve kann beispielsweise durch ein Polynom n-ten Grades beschrieben werden. Von Vorteil sind die bekannten Methoden, die eine nur verhältnismäßig geringe Rechenleitung erfordern. Hierzu gehört die Approximation mit den bekannten Spline-Funktionen. Bei einer besonders bevorzugten Ausführungsform ist die Interpolationskurve eine sich aus zwei Kreisen zusammensetzende Kurve, wobei die Kurve an dem Punkt, an dem sich die Kreise treffen, dieselbe Tangente haben (Biarc). Die Interpolationskurve kann auch durch mehrere, vorzugsweise zwei Kurven gebildet werden, die sich jeweils aus zwei Kreisen zusammensetzen.

Zur Bestimmung einer modellierten Wegstrecke wird der Abschnitt der Soll-Wegstrecke, in dem die Soll-Wegstrecke die Knickstelle hat, durch die Interpolationskurve ersetzt. Der Steuerung der Antriebseinrichtung wird dann nicht die vorgegebene Soll-Wegstrecke, sondern die modellierte Soll-Wegstrecke zugrunde gelegt, so dass sich der Referenzpunkt der Baumaschine entlang der modellierten Wegstrecke bewegt. Dadurch wird die Bewegung der Baumaschine insgesamt gleichmäßiger.

Die Modellierung der Soll-Wegstrecke kann für die Vorgabe eines Weges in einer horizontalen Ebene getrennt für die Vorgabe eines Weges in einer vertikalen Ebene für die Einstellung der Höhe erfolgen. Für eine getrennte Modellierung kann eine erste Soll-Wegstrecke festgelegt werden, die den Weg in der Ebene beschreibt, und eine zweite Soll-Wegstrecke festgelegt werden, die das Höhenprofil beschreibt. Beide Wegstrecken können mit der Modellierungseinrichtung unabhängig voneinander auf das Vorliegen von Knickstellen untersucht werden. Die Anzeige und Modellierung einzelner Abschnitte der Wegstrecke für das Höhenprofil kann analog zu der Modellierung der Wegstrecke in der Ebene erfolgen. Auf eine Modellierung des Höhenprofils kann aber auch verzichtet werden.

Bei einer Ausführungsform ist die Wegstrecken-Modellierungseinrichtung derart konfiguriert ist, dass an einer Stelle der Soll-Wegstrecke die linksseitige Ableitung und die rechtseitige Ableitung berechnet werden, und dass die linksseitige Ableitung und die rechtsseitige Ableitung an der Stelle der Soll-Wegstrecke miteinander verglichen werden. Die Ableitung entspricht der Steigung bzw. der Richtung einer Tangente an der Wegstrecke in dem betreffenden Punkt. Der Betrag der Differenz zwischen der linksseitigen und rechtsseitigen Ableitung ist ein Maß für die Stärke des Knicks an der Stelle der Soll-Wegstrecke. Wenn der Betrag der Differenz zwischen der linksseitigen und rechtsseitigen Ableitung mit einem vorgegebenen Grenzwert verglichen wird, kann zwischen einer noch tolerierbaren Knickstelle oder einer nicht mehr tolerierbaren Knickstelle unterschieden werden. Der Grenzwert, der das tolerierbare Maß der Abweichung von einer glatten Kurve bestimmt, kann ein fest vorgegebener und in der Speichereinheit gespeicherter Wert oder ein Wert sein, der von dem Benutzer mit der Eingabeeinheit eingegeben werden kann. Auf eine Knickstelle als solche kann geschlossen werden, wenn die linksseitige und rechtsseitige Ableitung an der betreffenden Stelle verschieden sind.

Unter einer Stelle der Soll-Wegstrecke wird jeder beliebige Punkt auf der Sollwegstrecke verstanden. Die Soll-Wegstrecke kann zwischen einem ersten Kontrollpunkt und einem zweiten Kontrollpunkt, insbesondere deren Anfangs- und Endpunkt, durchlaufen und an einer Vielzahl von Stellen auf das Vorliegen einer Knickstelle überprüft werden.

Wenn sich die Soll-Wegstrecke beispielsweise nur aus Elementen zusammensetzt, die Geraden sind, kann zur Berechnung der Koordinaten (Position) einer Knickstelle die Änderung der Richtung der Soll-Wegstrecke beim Durchlaufen der Wegstrecke zwischen aufeinanderfolgenden Elementen berechnet werden und die berechnete Richtungsänderung mit einem vorgegebenen Grenzwert für die Richtungsänderung verglichen werden. Bei einer Folge von geraden Elementen sind die Knickstellen die Stellen der Wegstrecke, an denen sich das Ende des einen geraden Elements und das Ende des anderen geraden Elements berühren, wenn die Geraden einen Winkel einschließen, d. h. sich die Richtung beim Durchlaufen der Wegstrecke ändert.

Bei einer gekrümmten Wegstrecke kann beim Durchlaufen der Wegstrecke die Änderung der Krümmung zum Auffinden von Knickstellen überprüft werden. Eine abrupte Änderung der Krümmung an einer Stelle der Wegstrecke ist eine Knickstelle.

Die Überprüfung der Soll-Wegstrecke auf Knickstellen kann zwischen einem ersten und einem zweiten Kontrollpunkt erfolgen. Die Kontrollpunkte können Anfangs- bzw. Endpunkt der Soll-Wegstrecke sein. Sie können aber auch zwischen Anfangspunkt und Endpunkt liegende Punkte auf der Wegstrecke sein, wenn nicht die gesamte Wegstrecke auf das Vorliegen von Knickstellen überprüft werden soll

Für die Visualisierung von Knickstellen auf der Soll-Wegstrecke kann die Wegstrecken-Modellierungseinrichtung derart konfiguriert sein, dass mit der Anzeigeeinheit die Lage der Knickstellen auf der Soll-Wegstrecke beschreibende Informationen, beispielsweise durch Markierungen, insbesondere Punkte auf der Wegstrecke, und Richtungsänderungen an den Knickstellen beschreibende Informationen, beispielsweise durch Angabe der erforderlichen Richtungsänderung in Winkelgraden, angezeigt werden. Beispielsweise wäre bei einem Übergang von einem geraden Abschnitt auf einen anderen geraden Abschnitt, die einen Winkel von 45° einschließen, eine Änderung der Richtung um einen Winkel von 45° erforderlich, wozu die Stellung der Laufwerke entsprechend verändert werden müsste.

Die Wegstrecken-Modellierungseinrichtung kann mit denselben Rechenalgorithmen auch nach der Modellierung der Soll-Wegstrecke die modellierte Wegstrecke nochmals auf das Vorliegen von Knickstellen überprüfen.

Eine Ausführungsform der Wegstrecken-Modellierungseinrichtung sieht vor, dass die Wegstrecken-Modellierungseinrichtung derart konfiguriert ist, dass zur Festlegung des zu modellierenden Abschnitts der Soll-Wegstrecke auf der Wegstrecke ein erster Stützpunkt und ein zweiter Stützpunkt, zwischen denen der Abschnitt der Wegstrecke liegt, festgelegt werden und die Koordinaten des ersten und zweiten Stützpunktes in der Speichereinheit gespeichert werden. Für den Abschnitt der Soll-Wegstrecke, in dem die Soll-Wegstrecke die Knickstelle hat, wird eine glatte, d. h. im Wesentlichen knickfreie, Interpolationskurve berechnet, die an den Stützpunkten ohne Knickstellen in die Soll-Wegstrecke übergeht.

Eine weitere Ausführungsform der Wegstrecken-Modellierungseinrichtung sieht vor, dass die Wegstrecken-Modellierungseinrichtung derart konfiguriert ist, dass in dem Abschnitt der Soll-Wegstrecke, in dem die Soll-Wegstrecke die Knickstelle hat, ein dritter Stützpunkt festgelegt wird, dessen Koordinaten in der Speichereinheit gespeichert werden. Für diesen Abschnitt der Soll-Wegstrecke wird eine glatte Interpolationskurve berechnet, die sowohl durch den ersten und zweiten Stützpunkt als auch durch den dritten Stützpunkt verläuft. Der dritte Stützpunkt kann jeder Punkt auf dem betreffenden Abschnitt der Soll-Wegstrecke sein. Eine bevorzugte Ausführungsform sieht vor, dass der dritte Stützpunkt die berechnete Knickstelle ist.

Der erste und/oder zweite und/oder dritte Stützpunkt können von der Recheneinheit vorgegebene Stützpunkte sein oder vom Benutzer vorgegebene oder ausgewählte Stützpunkte sein. Die Wegstrecken-Modellierungseinrichtung kann auch derart konfiguriert sein, dass die Lage von der Recheneinheit vorgegebener oder vom Benutzer ausgewählter Stützpunkte veränderbar ist. Von der Recheneinheit oder dem Benutzer können die Stützpunkte zunächst vorgegeben werden und anschließend vom Benutzer verschoben werden.

Die Wegstrecken-Modellierungseinrichtung erlaubt dem Benutzer das Aufspannen der Interpolationskurve in der Art eines "Gummibandes" zwischen dem ersten und zweiten Stützpunkt und das Greifen des "Gummibandes" an dem dritten Stützpunkt. Die Auswahl und das Verschieben der einzelnen Stützpunkte erlaubt eine gezielte Modellierung der Interpolationskurve, wobei das Ergebnis der Modellierung mit der Anzeigeeinheit für den Benutzer sichtbar ist. Folglich kann der Benutzer zwischen einer Vielzahl von möglichen knickfreien Kurvenverläufen eine Wegstrecke auswählen, die seinen Vorstellungen entspricht.

Die Wegstrecken-Modellierungseinrichtung kann auch derart konfiguriert sein, dass ein Abschnitt der Soll-Wegstrecke festgelegt wird oder festlegbar ist, in dem die Soll-Wegstrecke nicht nur eine sondern mehrere Knickstellen hat, wobei die mindestens zwei Knickstellen Stützpunkte der Interpolationskurve sind.

Die Eingabeeinheit und Anzeigeeinheit der Wegstrecken-Modellierungseinrichtung kann einen berührungsempfindlichen Bildschirm und/oder einen Bildschirm mit einem Eingabegerät, insbesondere eine Computermaus, umfassen, so dass die Steuerung des Programmablaufs der Recheneinheit durch Berührung von Teilen des Bildschirm und/oder durch Betätigung des Eingabegerätes erfolgt. Das Eingabegerät kann auch eine Tastatur oder Bedienelemente, wie Schalter, Taster oder dergleichen, umfassen.

Im Folgenden wird ein Ausführungsbeispiel der Erfindung unter Bezugnahme auf die Zeichnungen näher erläutert.

Es zeigen:
- Fig. 1: ein Ausführungsbeispiel eines Gleitschalungsfertigers in der Seitenansicht,
- Fig. 2: ein Ausführungsbeispiel einer Straßenfräsmaschine in der Seitenansicht,
- Fig. 3: eine schematische Darstellung des Gleitschalungsfertigers,
- Fig. 4: eine erste Bildschirmansicht der Wegstrecken-Modellierungseinrichtung,
- Fig. 5: eine zweite Bildschirmansicht der Wegstrecken-Modellierungseinrichtung,
- Fig. 6: eine dritte Bildschirmansicht der Wegstrecken-Modellierungseinrichtung,
- Fig. 7: eine vierte Bildschirmansicht der Wegstrecken-Modellierungseinrichtung,
- Fig. 8: eine fünfte Bildschirmansicht der Wegstrecken-Modellierungseinrichtung,
- Fig. 9: eine sechste Bildschirmansicht der Wegstrecken-Modellierungseinrichtung,
- Fig. 10: eine siebte Bildschirmansicht der Wegstrecken-Modellierungseinrichtung, und
- Fig. 11: eine achte Bildschirmansicht der Wegstrecken-Modellierungseinrichtung.

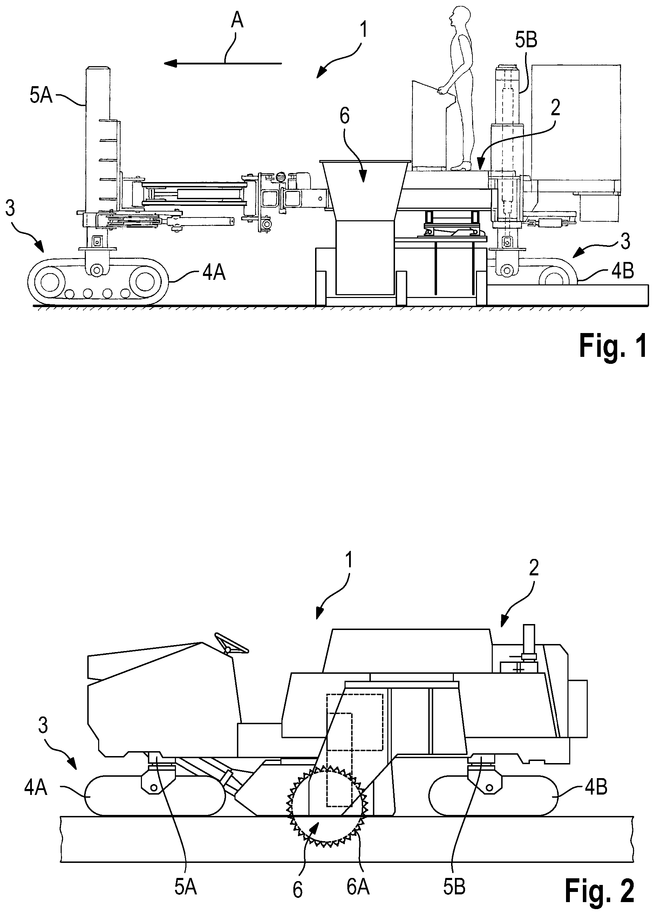

Die Fig. 1 zeigt als Beispiel für eine selbstfahrende Baumaschine 1 einen Gleitschalungsfertiger in der Seitenansicht ohne Fördereinrichtung, der in der EP 1 103 659 B1 im Einzelnen beschrieben ist. Da Gleitschalungsfertiger als solche zum Stand der Technik gehören, werden hier nur die für die Erfindung wesentlichen Komponenten der Baumaschine beschrieben.

Der Gleitschalungsfertiger weist einen Maschinenrahmen 2 auf, der von einem Fahrwerk 3 getragen wird. Das Fahrwerk 3 weist zwei vordere und zwei hintere, lenkbare Laufwerke 4A, 4B auf, die an vorderen und hinteren Hubsäulen 5A, 5B befestigt sind. Die Arbeitsrichtung (Fahrtrichtung) des Gleitschalungsfertigers ist mit einem Pfeil A gekennzeichnet.

Die Laufwerke 4A, 4B und die Hubsäulen 5A, 5B sind Teil einer Antriebseinrichtung des Gleitschalungsfertigers zum Ausführen von translatorischen und/oder rotatorischen Bewegungen. Zu der Antriebseinrichtung gehören auch nicht dargestellte vorzugsweise hydraulischen Antriebe für die Laufwerke 4A, 4B sowie ein nicht dargestellter Verbrennungsmotor. Mit den Laufwerken 4A, 4B kann die Baumaschine vor- und zurückbewegt werden. Durch Anheben und Absenken der Hubsäulen 5A, 5B kann der Maschinenrahmen 2 gegenüber dem Boden in der Höhe und Neigung bewegt werden. Damit hat die Baumaschine drei translatorische und drei rotatorische Freiheitsgrade.

Der Gleitschalungsfertiger verfügt über eine Vorrichtung 6 zum Formen von Beton, die nachfolgend als Betonmulde bezeichnet wird. Die Betonmulde 6 ist eine Arbeitseinrichtung zur Errichtung eines Baukörpers mit einer vorgegebenen Form auf dem Gelände, die zusammen mit dem Maschinenrahmen 2 angehoben oder abgesenkt werden kann.

Fig. 2 zeigt als weiteres Beispiel für eine selbstfahrende Baumaschine 1 eine Straßenfräsmaschine in der Seitenansicht. Auch die Straßenfräsmaschine 1 weist einen Maschinenrahmen 2 auf, der von einem Fahrwerk 3 getragen wird. Das Fahrwerk 3 weist wieder vordere und hintere Laufwerke 4A, 4B auf, die an vorderen und hinteren Hubsäulen 5A, 5B befestigt sind. Die Straßenfräsmaschine verfügt über eine Arbeitseinrichtung zum Verändern des Geländes. Hierbei handelt es sich um eine Fräseinrichtung 6 mit einer mit Fräswerkzeugen bestückten Fräswalze 6A.

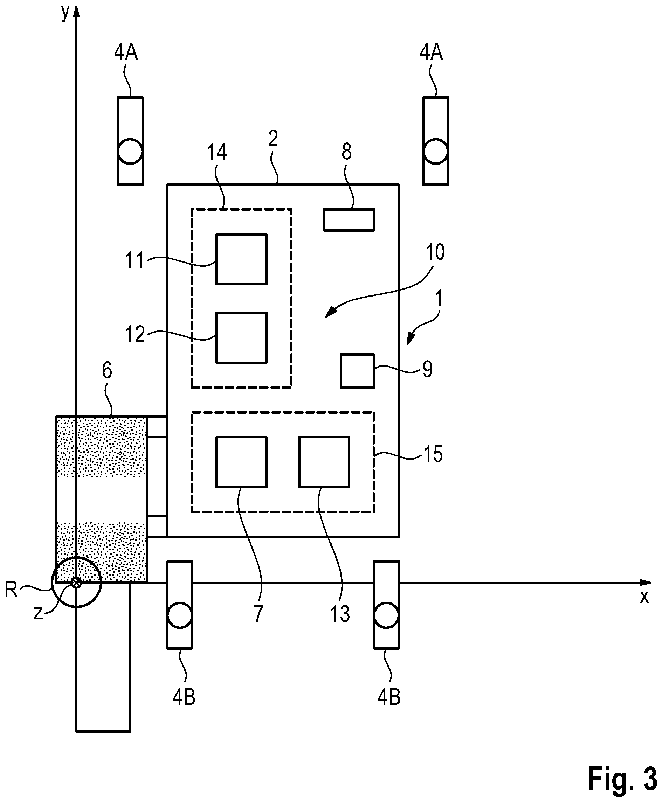

Fig. 3 zeigt die selbstfahrende Baumaschine 1 in einem kartesischen Koordinatensystem (X, Y, Z). Bei der Baumaschine kann es sich um einen Gleitschalungsfertiger, eine Straßenfräsmaschine oder jede andere Baumaschine mit einer entsprechenden Arbeitseinrichtung handeln. Bei dem vorliegenden Ausführungsbeispiel handelt es sich um einen Gleitschalungsfertiger, der über eine Betonmulde 6 verfügt. Der Gleitschalungsfertiger mit der Betonmulde ist nur andeutungsweise dargestellt. Er weist einen Maschinenrahmen 2, lenkbare Laufwerke 4A, 4B und die Betonmulde 6 auf.

Der Ursprung des Koordinatensystems liegt auf einem Referenzpunkt R des Gleitschalungsfertigers, wobei als Referenzpunkt R die in Fahrtrichtung hintere äußere Kante der Betonmulde 6 festgelegt wird. Diese Kante entspricht der äußeren Begrenzung des zur errichtenden Baukörpers.

Die Baumaschine 1 verfügt über eine automatische Steuerung unter dem Einsatz einer nicht dargestellten Totalstation oder eines nicht dargestellten GNSS-Systems. Eine derartige Steuerung gehört zum Stand der Technik. Die nur schematisch dargestellte Steuereinheit 7 der Baumaschine ist derart konfiguriert, dass sich der Referenzpunkt R auf der Baumaschine entlang einer bestimmten Wegstrecke, d. h. auf der Wegstrecke oder in einem Abstand zu der Wegstrecke (Äquidistante), bewegt. Die Steuereinheit 7 steuert hierzu die Lenkung der Laufwerke 4A, 4B und die Hubzylinder 5A, 5B derart an, dass sich der Referenzpunkt R entlang der Wegstrecke bewegt.

Die Baumaschine 1 verfügt weiterhin über eine Schnittstelle 8 zum Einlesen von Daten, mit denen eine Soll-Wegstrecke beschrieben wird. Die Daten können geometrische Vorgaben über den Verlauf der Soll-Wegstrecke W, beispielsweise Geraden oder Kurven sowie Längen und Winkel sein. Die Daten können aber auch kartesische Koordinaten (x, y, z) in einem Koordinatensystem (X, Y, Z) sein. Die x,y-Koordinaten können die Lage des Referenzpunktes R in einer horizontalen Ebene beschreiben und die z-Koordinate das Höhenprofil in einer vertikalen Ebene. Die Daten werden abseits der Baustelle in einem Büro ermittelt. Zum Speichern dieser Daten weist die Baumaschine eine Speichereinheit 9 auf. Der Verlauf der Soll-Wegstrecke in der horizontalen Ebene kann mit einer ersten Soll-Wegstrecke und das Höhenprofil mit einer zweiten Soll-Wegstrecke beschrieben werden. Diese Daten können in einem dreidimensionalen Datensatz enthalten sein.

Darüber hinaus verfügt die Baumaschine über eine Wegstrecken-Modelliereinrichtung 10, die eine Eingabeeinheit 11, eine Anzeigeeinheit 12 und eine Recheneinheit 13 umfasst. Bei dem vorliegenden Ausführungsbeispiel umfassen die Eingabeeinheit 11 und Anzeigeeinheit 12 der Wegstrecken-Modelliereinrichtung 10 einen berührungsempfindlichen Bildschirm 14 (Touchscreen), der in Fig. 3 in gestrichelten Linien dargestellt ist. Die Recheneinheit 13 kann Bestandteil einer zentralen Steuereinrichtung 15 der Baumaschine sein, wobei auch die Steuereinheit 7 Bestandteil der zentralen Steuereinrichtung 15 sein kann. Die zentrale Steuereinrichtung 15 kann beispielsweise allgemeine Prozessoren, digitale Signalprozessoren (DSP) zur kontinuierlichen Bearbeitung digitaler Signale, Mikroprozessoren, anwendungsspezifische integrierte Schaltungen (ASIC), aus Logikelementen bestehende integrierte Schaltkreise (FPGA) oder andere integrierte Schaltkreise (IC) oder Hardware-Komponenten aufweisen, um die einzelnen Verfahrensschritte zur Steuerung der Baumaschine auszuführen. Auf den Hardware-Komponenten kann zur Durchführung der Verfahrensschritte ein Datenverarbeitungsprogramm (Software) laufen.

Die Recheneinheit 13 sowie Eingabe- und Anzeigeeinheit 11, 12 (14) der Wegstrecken-Modelliereinrichtung 10 sind derart konfiguriert, dass die nachfolgend beschriebenen Funktionen ausgeführt werden.

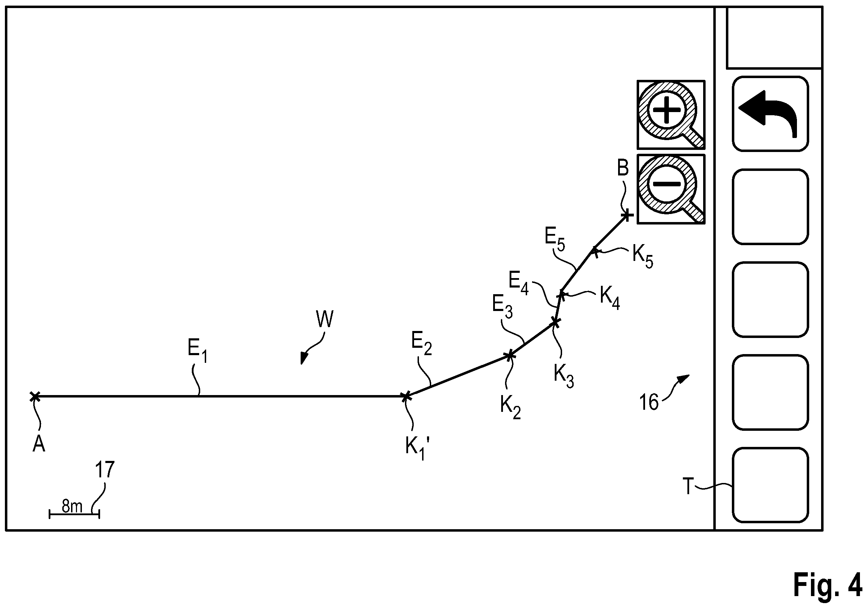

Fig. 4 zeigt eine erste Bildschirmansicht des Touchscreen 14. Auf einer Seite des Bildschirms befindet sich ein Bedienfeld 16 mit berührungsempfindlichen Tasten zum Aufruf bestimmter Funktionen. Im Zentrum des Bildschirms ist die Soll-Wegstrecke W dargestellt. Auf dem Bildschirm kann die gesamte oder ein Teil der Soll-Wegstrecke W für die Bewegung der Baumaschine in der horizontalen Ebene oder die Wegstrecke für das Höhenprofil angezeigt werden. Die Modellierung beider Wegstrecken erfolgt analog. Daher wird nachfolgend nur die Modellierung der Wegstrecke in der horizontalen Ebene beschrieben. Bei dem vorliegenden Ausführungsbeispiel wird die Wegstrecke zwischen dem Anfangspunkt A und dem Endpunkt B angezeigt. Am unteren Bildrand befindet sich ein Maßstab 17.

Die Wegstrecke W setzt sich aus mehreren Elementen E₁, E₂, E₃ ... Eₙ zusammen. Die Elemente E₁, E₂, E₃ ... Eₙ können Geraden oder Kurven sein. An den Übergängen zwischen den Elementen hat die Wegstrecke W Knickstellen K₁, K₂, K₃ ... Kₙ, an denen sich die Richtung der Wegstrecke stark ändert, was eine größere Verstellung des Lenkwinkels an dieser Stelle erfordert.

Der Benutzer kann mit der Eingabeeinheit 11, die auch eine separate Tastatur umfassen kann, einen Grenzwert für die Stärke eines nicht mehr tolerierbaren Knicks eingeben, der in der Speichereinheit 9 gespeichert wird. In dem Bedienfeld 16 des Touchscreen ist eine Taste T zur Auswahl einer Funktion vorgesehen, um die Wegstrecke auf das Vorhandensein von unzulässigen Knickstellen zu überprüfen.

Wenn der Benutzer diese Taste T berührt, wird eine Programmroutine gestartet. Die Programmroutine kann vorsehen, dass beim Durchlaufen der Wegstrecke zwischen einem ersten Kontrollpunkt und einem zweiten Kontrollpunkt, insbesondere dem Anfangs- und Endpunkt A,B, die Ableitung der Sollwegstrecke berechnet wird. Wenn die linkseitige und rechtsseitige Ableitung an einzelnen Stellen der Soll-Wegstrecke den aus der Speichereinheit 9 ausgelesenen Grenzwert übersteigt, wird auf eine Knickstelle geschlossen.

Bei dem Übergang von dem Element E₃ auf das Element E₄ beispielsweise, d. h. an dem Punkt K₃ ändert sich die Richtung der Soll-Wegstrecke abrupt, so dass der Betrag der Differenz der linksseitigen Ableitung und der rechtsseitigen Ableitung größer als der vorgegebene Grenzwert ist, so dass ein nicht mehr tolerierbarer Knick vorliegt. Der Betrag der Differenz der linksseitigen Ableitung und der rechtsseitigen Ableitung ist ein Maß für die Stärke des Knicks und die erforderliche Änderung des Lenkwinkels an der Knickstelle.

Die Koordinaten (x₁, y₁; x₂, y₂ ... xₙ,yₙ) der Knickstellen K₁, K₂, K₃ ... Kₙ, werden in der Speichereinheit 9 gespeichert. Mit den Koordinaten ist die Lage der Knickstellen K₁, K₂, K₃ ... Kₙ in dem Koordinatensystem (X, Y) bestimmt.

Nachfolgend wird die Bedienung nur im Zusammenhang mit einem Touchscreen beschrieben. Anstelle eines Touchscreen oder zusätzlich zu dem Touchscreen kann aber jedes andere geeignete Eingabegerät Verwendung finden, um Funktionen aufzurufen oder Punkte auszuwählen, beispielsweise durch Anklicken mit einer Computermaus.

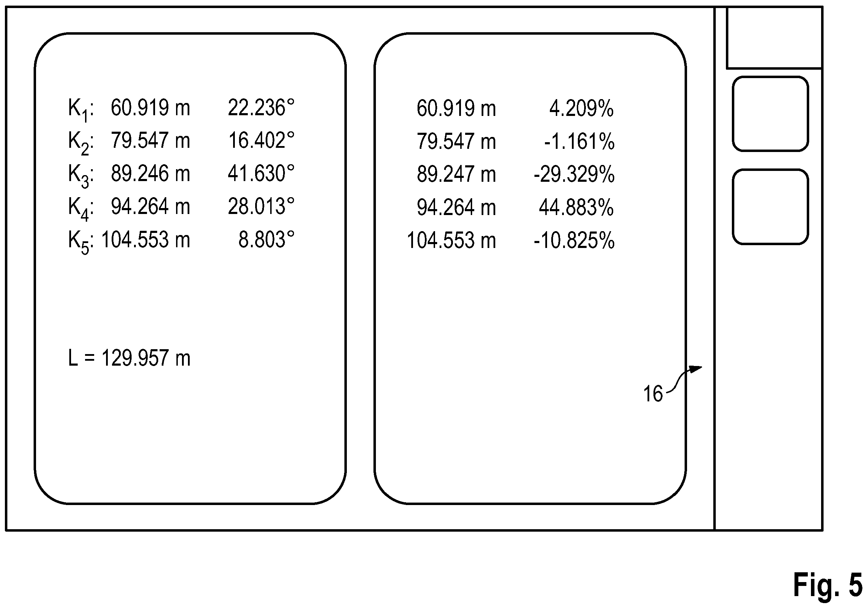

Die Recheneinheit 13 berechnet den Abstand zwischen dem Anfangspunkt A der Wegstrecke W und der jeweiligen Knickstelle K und die erforderliche Richtungsänderung. Nach Berühren der Taste T öffnet sich ein neues Bildschirmfenster, das in Fig. 5 dargestellt ist, auf dem Abstand und Richtungsänderung für die einzelnen Knickstellen K₁, K₂, K₃ ... Kₙ angezeigt werden. In diesem Bildschirm wird auch die Gesamtlänge L der Soll-Wegstrecke W angezeigt, die hier 129,957 m ist. Die erste Knickstelle K₁ nach 60,919 m erfordert beispielsweise eine Änderung der Richtung um 22.236°. In dem Bildschirmfenster können in analoger Weise auch Kickstellen im Höhenprofil angezeigt werden, wobei die Veränderung der Höhe an den Knickstellen in Prozent angegeben werden kann. In Fig. 5 ist eine derartige Anzeige auf der rechten Bildschirmseite dargestellt.

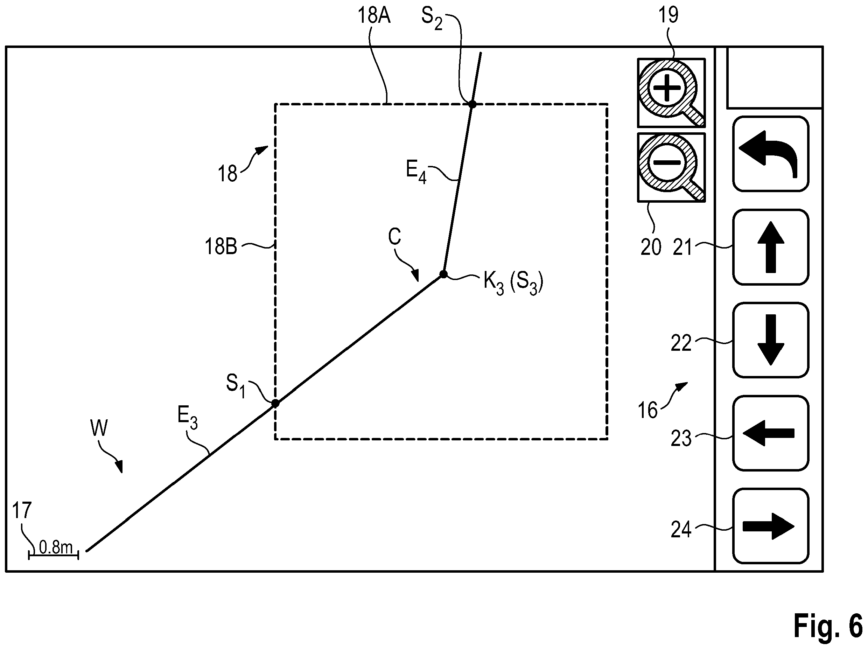

Der Benutzer kann die einzelnen Knickstellen K₁, K₂, K₃ ... Kₙ der Reihe nach abarbeiten. Hierzu ruft der Benutzer eine der Knickstellen auf, so dass sich ein neues Bildschirmfenster öffnet, das in Fig. 6 gezeigt ist. In diesem Fenster wird vorzugsweise in vergrößerter Darstellung der Abschnitt C der Soll-Wegstrecke W gezeigt, in dem die jeweilige Knickstelle K, beispielsweise die Knickstelle K₃ liegt. Dieser Abschnitt C ist ein Abschnitt der Soll-Wegstrecke W, der zwischen einem ersten Stützpunkt S₁ und einem zweiten Stützpunkt S₂ liegt. Zwischen dem ersten und zweiten Stützpunkt S₁, S₂ befindet sich die zuvor berechnete Knickstelle K₃ mit den Koordinaten (x₃,y₃). Der erste und zweite Stützpunkt S₁, S₂ liegen auf den Begrenzungslinien 18A, 18B eines Rahmens 8, dessen Lage und Größe der Benutzer verändern kann. Beispielsweise kann der Benutzer den Rahmen 18 durch Berühren einer der Begrenzungslinien 18A, 18B zu der jeweiligen Seite aufziehen. Wenn der Benutzer den Rahmen 18 vergrößert oder verkleinert bzw. verschiebt, verschiebt sich auch der erste und zweite Stützpunkt S₁, S₂, da der Stützpunkt als der Schnittpunkt von Begrenzungslinie und Soll-Wegstrecke W definiert ist. Durch Berühren der Tasten 19, 20 kann die Bildschirmdarstellung vergrößert oder verkleinert werden.

Der Knickpunkt K₃ der Soll-Wegstrecke W bildet einen dritten Stützpunkt S₃, den der Benutzer "greifen" kann. Der Benutzer kann den dritten Stützpunkt S₃ (Knickpunkt) durch Betätigung der Tasten 21, 22, 23, 24 in dem Bedienfeld 16 nach oben, unten, links oder rechts verschieben. Wenn der dritte Stützpunkt S₃ verschoben wird, verändert sich auch der Verlauf der zwischen dem ersten und zweiten Stützpunkt in der Art eines "Gummibandes" aufgespannten Abschnitts C der Soll-Wegstrecke W in dem Rahmen 18.

Die Recheneinheit 13 berechnet für den Abschnitt C der Soll-Wegstrecke W in dem Rahmen 18 eine glatte Interpolationskurve I, die an dem ersten Stützpunkt S₁ und dem zweiten Stützpunkt S₂ ohne eine Knickstelle in den außerhalb des Rahmen 18 liegenden Teil der Soll-Wegstrecke W übergeht. Wenn Größe und Lage des Rahmen 18 verändert werden und/oder der dritte Stützpunkt S₃ verschoben wird, verändert sich auch der Verlauf der Interpolationskurve I.

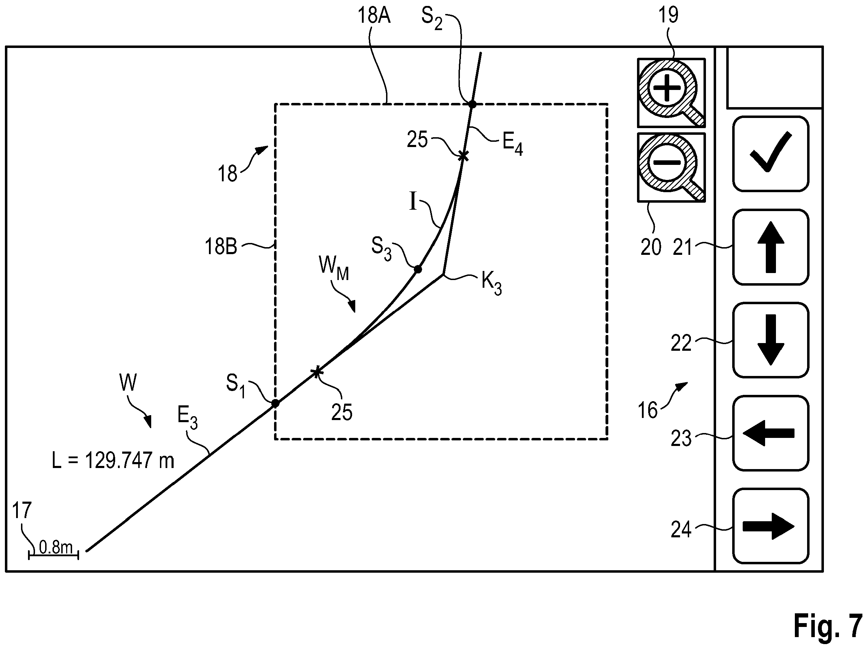

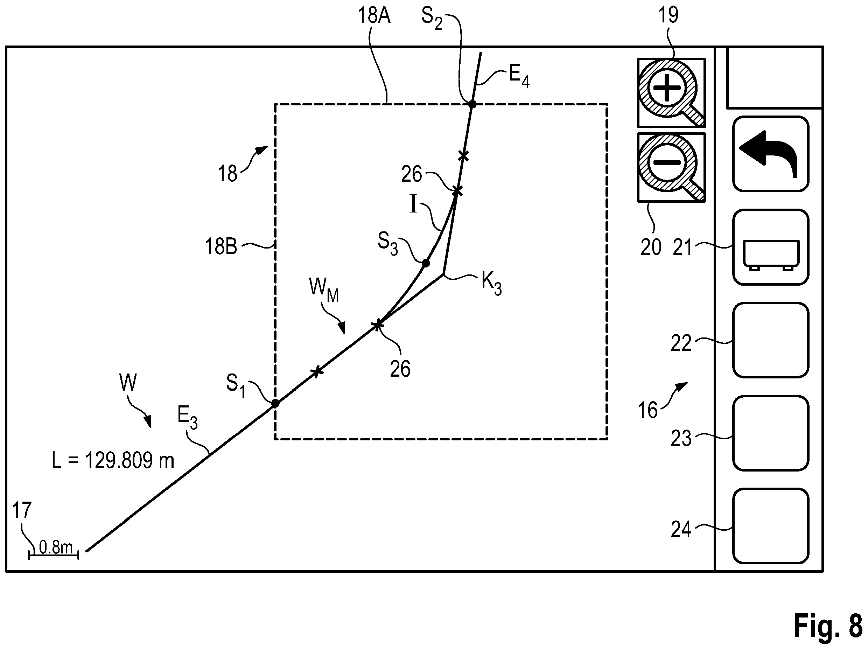

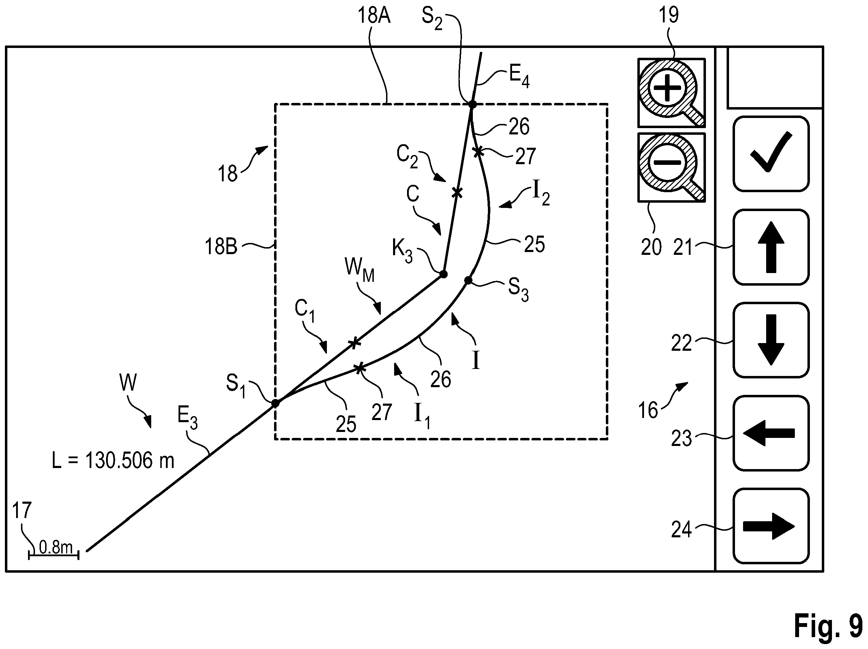

Die Figuren zeigen die Veränderung des Verlaufs der Interpolationskurve I, wenn der dritte Stützpunkt S₃ verschoben wird. Es zeigt sich, dass die Interpolationskurve I den ursprünglichen Abschnitt C an zwei Berührungspunkten 25 berührt (Fig. 7), an zwei Schnittpunkten 26 schneidet (Fig. 8) oder weder berührt noch schneidet (Fig. 9). Wenn die Interpolationskurve I verändert wird, verändert sich auch die Gesamtlänge L der Sollwegstrecke W, was für die unterschiedlichen Interpolationskurven ebenfalls angezeigt wird. Die Gesamtlänge L der Soll-Wegstrecke W für den Fall, dass die Interpolationskurve den ursprünglichen Abschnitt weder berührt noch schneidet ist, mit 130,506 m am längsten (Fig. 9).

Der Benutzer kann aus den verschiedenen Kurven eine Interpolationskurve I auswählen, die seinen Vorstellungen an eine optimale Approximation entspricht. Wenn der Benutzer die Interpolationskurve I ausgewählt hat, wird der Abschnitt C der Soll-Wegstrecke W, in dem die Soll-Wegstrecke die Knickstelle K₃ hat, durch die ausgewählte Interpolationskurve I ersetzt, so dass sich eine modellierte Soll-Wegstrecke W_{M} ergibt, die in der Speichereinheit 9 gespeichert wird.

Der Benutzer kann die einzelnen Knickstellen K₁, K₂, K₃ ... Kₙ nacheinander abarbeiten, wobei die modellierte Soll-Wegstrecke W_{M} unter Berücksichtigung der Vorgaben des Benutzers jeweils neu berechnet wird. Die Steuereinheit 7 steuert die Antriebseinrichtung dann derart an, dass sich der Referenzpunkt R auf der Baumaschine 1 entlang der modellierten Wegstrecke W_{M} bewegt.

Bei dem vorliegenden Ausführungsbeispiel berechnet die Recheneinheit 13 die Interpolationskurve I mit einem Verfahren, das unter der Bezeichnung Zweikreis-Interpolation (Biarc Interpolation) bekannt ist. Diese Methode wird nachfolgend unter Bezugnahme auf Fig. 9 verdeutlicht. Der Abschnitt C der Soll-Wegstrecke W in dem Rahmen 18 wird in einen ersten Teilabschnitt C₁, der sich zwischen der ersten Stützstelle S₁ und der dritten Stützstelle S₃ erstreckt, und in einen zweiten Teilabschnitt C₂, der sich zwischen der zweiten Stützstelle S₂ und der dritten Stützstelle S₃ erstreckt, unterteilt. Für den ersten und zweiten Teilabschnitt C₁, C₂ berechnet die Recheneinheit 13 jeweils eine Interpolationskurve I₁, I₂, die sich aus zwei Kreisen 25, 26 zusammensetzt. Die Verbindungspunkte beider Kreise 25, 26 sind in Fig. 9 mit 27 bezeichnet. An den Verbindungspunkten 27 haben die beiden Kreise 25, 26 dieselbe Tangente, so dass die Interpolationskurve I eine glatte Kurve ist. Dies trifft auch für den Stützpunkt S₃ zu.

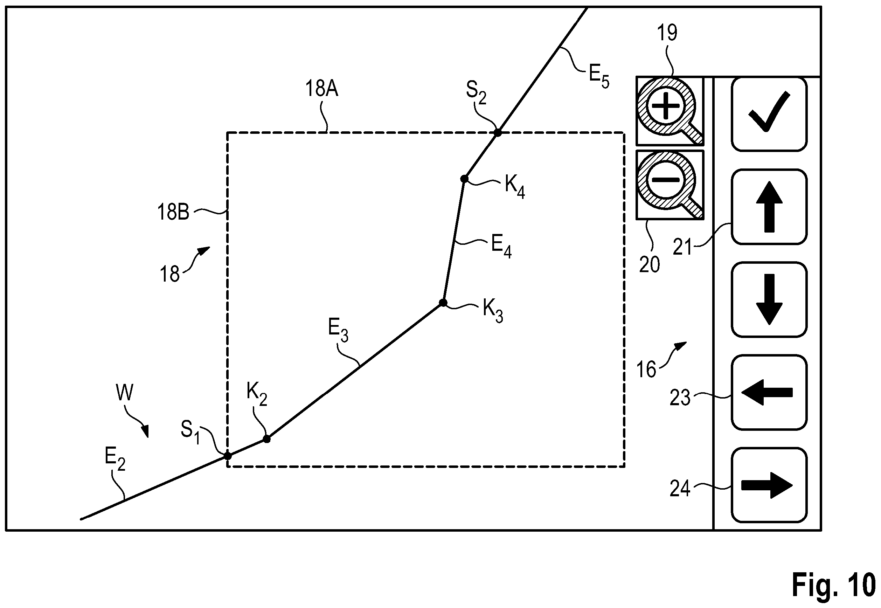

Fig. 10 zeigt eine weitere Ausführungsform, die sich von dem unter Bezugnahme auf die Figuren 6 bis 9 beschriebenen Ausführungsbeispiel dadurch unterscheidet, dass der Rahmen 18 nicht nur eine Knickstelle sondern mehrere Knickstellen enthält. Der Rahmen 18 enthält die Knickstelle K₃ und die benachbarten Knickstellen K₂ und K₄. Die einander entsprechenden Elemente sind mit den gleichen Bezugszeichen versehen.

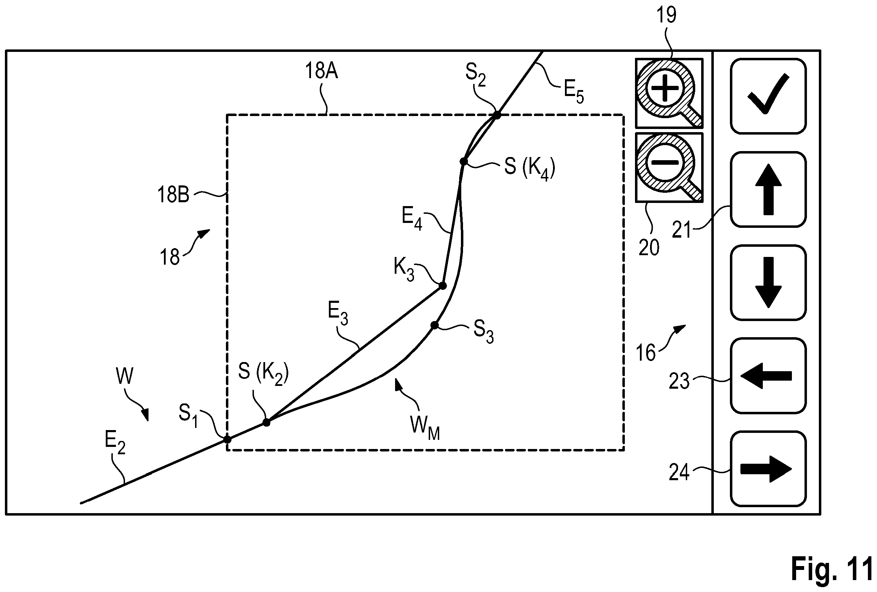

Fig. 11 zeigt das Bildschirmfenster mit der Interpolationskurve I, die von der Recheneinheit 13 berechnet wird. Bei diesem Ausführungsbeispiel bilden sowohl die Knickstelle K₃ als auch die benachbarten Knickstellen K₂ und K₄ Stützstellen S(K₂) und S(K4) der Interpolationskurve I. Der Benutzer kann die Stützstelle K₃ wie bei dem Ausführungsbeispiel der Figuren 6 bis 9 verschieben, wobei die nach Art eines "Gummibandes" zwischen den Stützstellen S₁ und S₂ aufgespannte Interpolationskurve I ihren Verlauf ändert. Allerdings verläuft die Interpolationskurve I auch durch die Knickstellen K₂ und K₄ bzw. Stützstellen S(K₂) und S(K₄), deren Lage unverändert bleibt. An den Stützstellen S₁ und S₂ geht die Interpolationskurve wieder ohne einen Knick in die Soll-Wegstrecke W über.

## Patentansprüche

1. Selbstfahrende Baumaschine mit
einem Maschinenrahmen (2),
einer Antriebseinrichtung zum Antreiben der Baumaschine, so dass ein Referenzpunkt (R) auf der Baumaschine translatorische und/oder rotatorische Bewegungen ausführt,
einer am Maschinenrahmen (2) angeordneten Arbeitseinrichtung zur Errichtung von Baukörpern auf einem Gelände oder zum Verändern des Geländes,
einer Schnittstelle (8) zum Einlesen von Daten, die eine in der Planung vorgegebene Soll-Wegstrecke (W) in einem Koordinatensystem beschreiben,
einer Speichereinheit (9) zum Speichern der die Soll-Wegstrecke (W) beschreibenden Daten,
einer Steuereinheit (7), die derart konfiguriert ist, dass sich ein Referenzpunkt (R) auf der Baumaschine entlang einer Wegstrecke bewegt,
**dadurch gekennzeichnet, dass**
die Baumaschine eine Wegstrecken-Modellierungseinrichtung (10) aufweist, die eine Eingabeeinheit (11), eine Anzeigeeinheit (12) und eine Recheneinheit (13) umfasst, wobei die Wegstrecken-Modellierungseinrichtung (10) derart konfiguriert ist, dass
die Position zumindest einer Knickstelle (K) auf der Soll-Wegstrecke (W) bestimmt wird,
zumindest ein Teil der Soll-Wegstrecke (W) angezeigt wird, in dem die Soll-Wegstrecke die Knickstelle (K) hat,
in dem zumindest einen Teil der Soll-Wegstrecke (W) ein Abschnitt (C) festgelegt wird oder festlegbar ist, in dem die Soll-Wegstrecke die Knickstelle (K) hat,
für den Abschnitt (C) der Soll-Wegstrecke (W), in dem die Soll-Wegstrecke die Knickstelle (K) hat, eine Interpolationskurve (I) berechnet wird, und
zur Bestimmung einer modellierten Wegstrecke (W_{M}) der Abschnitt (C) der Wegstrecke (W), in dem die Soll-Wegstrecke die Knickstelle (K) hat, durch die Interpolationskurve (I) ersetzt wird, so dass sich der Referenzpunkt (R) auf der Baumaschine entlang der modellierten Wegstrecke (W_{M}) bewegt.

2. Selbstfahrende Baumaschine nach Anspruch 1, **dadurch gekennzeichnet, dass** die Wegstrecken-Modellierungseinrichtung (10) derart konfiguriert ist, dass an einer Stelle der Soll-Wegstrecke die linksseitige Ableitung und die rechtseitige Ableitung berechnet werden, und dass die linksseitige Ableitung und die rechtsseitige Ableitung an der Stelle der Soll-Wegstrecke (W) miteinander verglichen werden, wobei auf das Vorliegen einer Knickstelle und/oder die Stärke des Knicks auf der Grundlage der Differenz der linksseitigen und rechtsseitigen Ableitung geschlossen wird.

3. Selbstfahrende Baumaschine nach Anspruch 1 oder 2, **dadurch gekennzeichnet, dass** die Wegstrecken-Modellierungseinrichtung (10) derart konfiguriert ist, dass zur Festlegung des Abschnitts (C), in dem die Soll-Wegstrecke die Knickstelle (K) hat, auf der Wegstrecke ein erster Stützpunkt (S₁) und ein zweiter Stützpunkt (S₂), zwischen denen der Abschnitt der Wegstrecke liegt, festgelegt wird, und dass die Koordinaten des ersten und zweiten Stützpunktes (S₁, S₂) in der Speichereinheit (9) gespeichert werden, wobei für den Abschnitt (C) der Soll-Wegstrecke (W), in dem die Soll-Wegstrecke die Knickstelle (K) hat, eine glatte Interpolationskurve (I) berechnet wird, die an den Stützpunkten (S₁, S₂) ohne Knickstellen in die Soll-Wegstrecke übergeht.

4. Selbstfahrende Baumaschine nach Anspruch 3, **dadurch gekennzeichnet, dass** die Wegstrecken-Modellierungseinrichtung (10) derart konfiguriert ist, dass in dem Abschnitt (C) der Wegstrecke (W), in dem die Soll-Wegstrecke die Knickstelle (K) hat, ein dritter Stützpunkt (S₃) festgelegt wird, dessen Koordinaten in der Speichereinheit (9) gespeichert werden, wobei für diesen Abschnitt der Soll-Wegstrecke eine glatte Interpolationskurve (I) berechnet wird, die durch den dritten Stützpunkt (S₃) verläuft.

5. Selbstfahrende Baumaschine nach Anspruch 4, **dadurch gekennzeichnet, dass** der dritte Stützpunkt (S₃) die berechnete Knickstelle (K) ist.

6. Selbstfahrende Baumaschine nach einem der Ansprüche 3 bis 5, **dadurch gekennzeichnet, dass** die Wegstrecken-Modellierungseinrichtung (10) derart konfiguriert ist, dass die Stützpunkte (S₁, S₂, S₃) vorgegebene Stützpunkte oder vom Benutzer auswählbare Stützpunkte sind.

7. Selbstfahrende Baumaschine nach einem der Ansprüche 3 bis 6, **dadurch gekennzeichnet, dass** die Wegstrecken-Modellierungseinrichtung (10) derart konfiguriert ist, dass die Lage der vorgegebenen oder vom Benutzer ausgewählten Stützpunkte veränderbar ist.

8. Selbstfahrende Baumaschine nach einem der Ansprüche 1 bis 7, **dadurch gekennzeichnet, dass** die Wegstrecken-Modellierungseinrichtung (10) derart konfiguriert ist, dass ein Abschnitt der Soll-Wegstrecke (W) festgelegt wird oder festlegbar ist, in dem die Soll-Wegstrecke (W) mindestens zwei Knickstellen (K) hat, wobei die mindestens zwei Knickstellen (K) Stützpunkte der Interpolationskurve (I) sind.

9. Selbstfahrende Baumaschine nach einem der Ansprüche 1 bis 8, **dadurch gekennzeichnet, dass** die Eingabeeinheit (11) und Anzeigeeinheit (12) der Wegstrecken-Modellierungseinrichtung (10) einen berührungsempfindlichen Bildschirm (14) und/oder einen Bildschirm mit einem Eingabegerät, insbesondere eine Computermaus, umfasst.

10. Selbstfahrende Baumaschine nach einem der Ansprüche 1 bis 9, **dadurch gekennzeichnet, dass** die selbstfahrende Baumaschine (1) ein Gleitschalungsfertiger ist, wobei die Arbeitseinrichtung eine Vorrichtung (6) zum Formen von fließfähigem Material aufweist, oder eine Straßenfräsmaschine ist, wobei die Arbeitseinrichtung eine Fräs- oder Schneidwalze aufweist.

11. Verfahren zum Steuern einer selbstfahrende Baumaschine (1), die einen Maschinenrahmen (2), eine Antriebseinrichtung zum Antreiben der Baumaschine, so dass ein Referenzpunkt (R) auf der Baumaschine translatorische und/oder rotatorische Bewegungen ausführt, und eine am Maschinenrahmen (2) angeordnete Arbeitseinrichtung zur Errichtung von Baukörpern auf einem Gelände oder zum Verändern des Geländes aufweist, wobei die Antriebseinrichtung derart angesteuert wird, dass sich ein Referenzpunkt (R) auf der Baumaschine entlang einer Wegstrecke (W) bewegt,
**dadurch gekennzeichnet, dass**
von einer Wegstrecken-Modellierungseinrichtung (10) die folgenden Verfahrensschritte durchgeführt werden:
die Position zumindest einer Knickstelle (K) auf der Soll-Wegstrecke (W) wird bestimmt,
zumindest ein Teil der Soll-Wegstrecke (W) wird angezeigt, in dem die Soll-Wegstrecke die Knickstelle (K) hat,
in dem zumindest einen Teil der Soll-Wegstrecke (W) wird ein Abschnitt (C) festgelegt, in dem die Soll-Wegstrecke die Knickstelle (K) hat,
für den Abschnitt der Soll-Wegstrecke (W), in dem die Soll-Wegstrecke die Knickstelle (K) hat, wird eine Interpolationskurve (I) berechnet, und
zur Bestimmung einer modellierten Wegstrecke (W_{M}) wird der Abschnitt (C) der Soll-Wegstrecke (W), in dem die Soll-Wegstrecke die Knickstelle (K) bat, durch die Interpolationskurve (I) ersetzt, so dass sich der Referenzpunkt (R) auf der Baumaschine entlang der modellierten Wegstrecke (W_{M}) bewegt.

12. Verfahren zum Steuern einer selbstfahrenden Baumaschine nach Anspruch 11, **dadurch gekennzeichnet, dass** von der Wegstrecken-Modellierungseinrichtung (10) an einer Stelle der Soll-Wegstrecke (W) die linksseitige Ableitung und die rechtseitige Ableitung berechnet wird, und dass die linksseitige Ableitung und die rechtsseitige Ableitung au der Stelle der Soll-Wegstrecke (W) miteinander verglichen werden, wobei auf das Vorliegen einer Knickstelle und/oder die Stärke des Knicks auf der Grundlage der Differenz der linksseitigen und rechtsseitigen Ableitung geschlossen wird.

13. Verfahren zum Steuern einer selbstfahrenden Baumaschine nach Anspruch 11 oder 12, **dadurch gekennzeichnet, dass** von der Wegstrecken-Modellierungseinrichtung (10) zur Festlegung des Abschnitts (C) der Soll-Wegstrecke (W) auf der Wegstrecke ein erster Stützpunkt (S₁) und ein zweiter Stützpunkt (S₁, S₂), zwischen denen der Abschnitt (C) der Soll-Wegstrecke (W) liegt, festgelegt wird, wobei für den Abschnitt (C) der Soll-Wegstrecke (W), in dem die Soll-Wegstrecke die Knickstelle (K) hat, eine glatte Interpolationskurve (I) berechnet wird, die an den Stützpunkten (S₁, S₂) ohne Knickstellen in die Soll-Wegstrecke übergeht.

14. Verfahren zum Steuern einer selbstfahrenden Baumaschine nach Anspruch 13, **dadurch gekennzeichnet, dass** von der Wegstrecken-Modellierungseinrichtung (10) in dem Abschnitt (C) der Soll-Wegstrecke (W) ein dritter Stützpunkt (S₃) festgelegt wird, wobei für den Abschnitt (C) der Soll-Wegstrecke (W), in dem die Soll-Wegstrecke die Knickstelle (K) hat, eine glatte Interpolationskurve (I) berechnet wird, die durch den dritten Stützpunkt (S₃) verläuft.

15. Verfahren zum Steuern einer selbstfahrenden Baumaschine nach Anspruch 14, **dadurch gekennzeichnet, dass** der dritte Stützpunkt (S₃) der berechnete Knickpunkt (K) ist.

16. Verfahren zum Steuern einer selbstfahrenden Baumaschine nach einem der Ansprüche 11 bis 15, **dadurch gekennzeichnet, dass** die Stützpunkte (S₁, S₂, S₃) vorgegebene Stützpunkte oder vom Benutzer auswählbare Stützpunkte sind.

17. Verfahren zum Steuern einer selbstfahrenden Baumaschine nach einem der Ansprüche 11 bis 16, **dadurch gekennzeichnet, dass** von der Wegstrecken-Modellierungseinrichtung (10) ein Abschnitt (C) der Soll-Wegstrecke (W) festgelegt wird oder festlegbar ist, in dem die Soll-Wegstrecke (W) mindestens zwei Knickstellen (K) hat, wobei die mindestens zwei Knickstellen (K) Stützpunkte der Interpolationskurve (I) sind.

## Claims

1. Self-propelled construction machine with
a machine frame (2),
a drive device to drive the construction machine, in such a way that a point of reference (R) on the construction machine executes translatory and/or rotational motions,
a work device arranged on the machine frame (2) for construction of building structures on a site or to modify the site,
an interface (8) for importing data describing a target route (W), predetermined during planning, within a system of coordinates,
a memory unit (9) for storage of the data describing the target route (W),
a control unit (7), that is configured in such a way that a point of reference (R) on the construction machine moves along a route,
**characterised in that**
the construction machine comprises a route modelling device (10) that includes an input unit (11), a display unit (12) and a processing unit (13), the route modelling device (10) being configured in such a way that
the position of at least one kink (K) on the target route (W) is determined,
at least one portion of the target route (W) is displayed, in which the target route has the kink (K),
in the at least one portion of the target route (W), a section (C) is determined or can be determined, in which the target route has a kink (K),
for the section (C) of the target route (W) in which the target route has the kink (K), an interpolation curve (I) is calculated, and
for the determination of a modelled route (W_{M}), the section (C) of the route (W) in which the target route has the kink (K) is replaced by the interpolation curve (I), in such a way that the point of reference (R) on the construction machine moves along the modelled route (W_{M}).

2. Self-propelled construction machine according to Claim 1, **characterised in that** the route modelling device (10) is configured in such a way that at a location of the target route, the left-sided deflection and the right-sided deflection are determined, and that the left-sided deflection and the right-sided deflection at the location of the target route (W) are compared with one another, whereby the presence of a kink and/or the magnitude of the kink is concluded on the basis of the difference between the left-sided and right-sided deflection.

3. Self-propelled construction machine according to Claim 1 or 2, **characterised in that** the route modelling device (10) is configured in such a way that for the determination of the section (C) in which the target route has the kink (K), a first point of support (S₁) and a second point of support (S₂) are determined, between which is found the section of the route, and that the coordinates of the first and second point of support (S₁, S₂) are stored in the memory unit (9), whereby for the section (C) of the target route (W) in which the target route has the kink (K), a smooth interpolation curve (I) is calculated which transitions into the target route at the points of support (S₁, S₂) without any kinks.

4. Self-propelled construction machine according to Claim 3, **characterised in that** the route modelling device (10) is configured in such a way that in the section (C) of the route (W) in which the target route has the kink (K), a third point of support (S₃) is determined, the coordinates of which are stored in the memory unit (9), whereby a smooth interpolation curve (I) which passes through the third point of support (S₃) is calculated for this section of the target route.

5. Self-propelled construction machine according to Claim 4, **characterised in that** the third point of support (S₃) is the calculated kink (K).

6. Self-propelled construction machine according to any one of Claims 3 through 5, **characterised in that** the route modelling device (10) is configured in such a way that the points of support (S₁, S₂, S₃) are predetermined points of support or user-selectable points of support.

7. Self-propelled construction machine according to any one of Claims 3 through 6, **characterised in that** the route modelling device (10) is configured in such a way that the location of the predetermined or user-selected points of support is modifiable.

8. Self-propelled construction machine according to any one of claims 1 through 7, **characterised in that** the route modelling device (10) is configured in such a way that a section of the target route (W) is determined or determinable, in which the target route (W) has at least two kinks (K), whereby the at least two kinks (K) are points of support of the interpolation curve (I).

9. Self-propelled construction machine according to any one of Claims 1 through 8, **characterised in that** the input unit (11) and display unit (12) of the route modelling device (10) include a touch-sensitive screen (14) and/or a screen having an input device, in particular a computer mouse.

10. Self-propelled construction machine according to any one of Claims 1 through 9, **characterised in that** the self-propelled construction machine (1) is a slipform paver, whereby the work device exhibits an apparatus (6) for forming flowable material, or is a road milling machine, whereby the work device exhibits a milling or cutting roller.

11. Process for control of a self-propelled construction machine (1) that has a machine frame (2), a drive device for driving the construction machine such that a point of reference (R) on the construction machine executes translatory and/or rotational motions, and a work device arranged on the machine frame (2) for construction of building structures on a site or to modify the site, whereby the drive device is controlled in such a way that a point of reference (R) on the construction machine moves along a route (W),
**characterised in that**
the following method steps are performed with a route modelling device (10):
the position of at least one kink (K) is determined on the target route (W),
at least one portion of the target route (W) is displayed, in which the target route has the kink (K),
a section (C) is determined in the at least one portion of the target route (W) in which the target route has the kink (K),
for the section of the target route (W) in which the target route has the kink (K), an interpolation curve (I) is calculated, and
for the determination of a modelled route (W_{M}), the section (C) of the target route (W) in which the target route has the kink (K) is replaced by the interpolation curve (I), such that the point of reference (R) on the construction machine moves along the modelled route (W_{M}).

12. Process for control of a self-propelled construction machine according to Claim 11, **characterised in that**, at a location of the target route (W), the left-sided deflection and the right-sided deflections are calculated with the route modelling device (10), and **in that** the left-sided deflection and the right-sided deflection at the location of the target route (W) are compared to one another, whereby the presence of a kink and/or the magnitude of the kink is concluded on the basis of the difference between the left-sided and right-sided deflection.

13. Process for control of a self-propelled construction machine according to Claim 11 or 12, **characterised in that** for the determination of the section (C) of the target route (W), a first point of support (S₁) and a second point of support (S₁, S₂) are determined with the route modelling device (10), between which is found the section (C) of the target route (W), whereby for the section (C) of the target route (W) in which the target route has the kink (K), a smooth interpolation curve (I) is calculated which transitions into the target route at the points of support (S₁, S₂) without any kinks.

14. Process for control of a self-propelled construction machine according to Claim 13, **characterised in that** in the section (C) of the target route (W) a third point of support (S₃) is determined with the route modelling device (10), whereby a smooth interpolation curve (I) which passes through the third point of support (S₃) is calculated for the section (C) of the target route (W) in which the target route has the kink (K).

15. Process for control of a self-propelled construction machine according to Claim 14, **characterised in that** the third point of support (S₃) is the calculated kink point (K).

16. Process for control of a self-propelled construction machine according to any one of Claims 11 through 15, **characterised in that** the points of support (S₁, S₂, S₃) are predetermined points of support or user-selectable points of support.

17. Process for control of a self-propelled construction machine according to any one of Claims 1 through 16, **characterised in that** a section (C) of the target route (W) is determined or is determinable with the route modelling device (10), in which the target route (W) has at least two kinks (K), whereby the at least two kinks (K) are points of support of the interpolation curve (I).

## Revendications

1. Engin de chantier autopropulsé avec
un châssis d'engin (2),
un dispositif d'entraînement pour l'entraînement de l'engin de chantier de sorte qu'un point de référence (R) sur l'engin de chantier réalise des mouvements transitoires et/ou rotatifs,
un dispositif de travail agencé au niveau du châssis d'engin (2) pour l'élévation de corps structurels sur un terrain ou pour la modification du terrain,
une interface (8) pour la lecture de données qui décrivent, dans un système de coordonnées, un parcours de consigne (W) prédéfini dans la planification,
une unité d'enregistrement (9) pour l'enregistrement des données décrivant le parcours de consigne (W),
une unité de commande (7) qui est configurée de telle manière qu'un point de référence (R) sur l'engin de chantier se déplace le long d'un parcours, **caractérisé en ce que**
l'engin de chantier présente un dispositif de modélisation de parcours (10) qui comporte une unité de saisie (11), une unité d'affichage (12) et une unité de calcul (13), dans lequel le dispositif de modélisation de parcours (10) est configuré de telle manière que
la position au moins d'un point d'inflexion (K) soit déterminée sur le parcours de consigne (W),
au moins une partie de parcours de consigne (W) soit affichée, dans laquelle le parcours de consigne présente le point d'inflexion (K),
dans l'au moins une partie du parcours de consigne (W) une section (C) soit fixée ou puisse être fixée, dans laquelle le parcours de consigne présente le point d'inflexion (K),
pour la section (C) du parcours de consigne (W), dans laquelle le parcours de consigne présente le point d'inflexion (K), une courbe d'interpolation (I) soit calculée, et
pour la détermination d'un parcours (W_{M}) modélisé, la section (C) du parcours (W), dans laquelle le parcours de consigne présente le point d'inflexion (K), soit remplacée par la courbe d'interpolation (I) de sorte que le point de référence (R) sur l'engin de chantier se déplace le long du parcours (W_{M}) modélisé.

2. Engin de chantier autopropulsé selon la revendication 1, **caractérisé en ce que** le dispositif de modélisation de parcours (10) est configuré de telle manière qu'en un point du parcours de consigne la dérivée côté gauche et la dérivée côté droit soient calculées, et que la dérivée coté gauche et la dérivée côté droit soient comparées entre elles au point du parcours de consigne (W), dans lequel il est conclu à la présence d'un point d'inflexion et/ou à la force d'inflexion sur la base de la différence entre la dérivée côté gauche et côté droit.

3. Engin de chantier autopropulsé selon la revendication 1 ou 2, **caractérisé en ce que** le dispositif de modélisation de parcours (10) est configuré de telle manière que pour la fixation de la section (C), dans laquelle le parcours de consigne présente le point d'inflexion (K), un premier point d'appui (S₁) et un deuxième point d'appui (S₂), entre lesquels la section de parcours se trouve, sont fixés sur le parcours, et que les coordonnées du premier et du second point d'appui (S₁, S₂) sont enregistrées dans l'unité d'enregistrement (9), dans lequel pour la section (C) du parcours de consigne (W), dans laquelle le parcours de consigne présente le point d'inflexion (K), une courbe d'interpolation lisse (I) est calculée, laquelle passe au niveau des points d'appui (S₁, S₂) sans point d'inflexion en parcours de consigne.

4. Engin de chantier autopropulsé selon la revendication 3, **caractérisé en ce que** le dispositif de modélisation de parcours (10) est configuré de telle manière que dans la section (C) du parcours (W), dans laquelle le parcours de consigne présente le point d'inflexion (K), un troisième point d'appui (S₃) soit fixé, dont les coordonnées sont enregistrées dans l'unité d'enregistrement (9), dans lequel pour cette section du parcours de consigne une courbe d'interpolation lisse (I) est calculée, laquelle s'étend à travers le troisième point d'appui (S₃).

5. Engin de chantier autopropulsé selon la revendication 4, **caractérisé en ce que** le troisième point d'appui (S₃) est le point d'inflexion (K) calculé.

6. Engin de chantier autopropulsé selon l'une des revendications 3 à 5, **caractérisé en ce que** le dispositif de modélisation de parcours (10) est configuré de telle manière que les points d'appui (S₁, S₂, S₃) soient des points d'appui prédéfinis ou des points d'appui sélectionnables par l'utilisateur.

7. Engin de chantier autopropulsé selon l'une des revendications 3 à 6, **caractérisé en ce que** le dispositif de modélisation de parcours (10) est configuré de telle manière que la position des points d'appui prédéfinis ou sélectionnés par l'utilisateur soit modifiable.

8. Engin de chantier autopropulsé selon l'une des revendications 1 à 7, **caractérisé en ce que** le dispositif de modélisation de parcours (10) est configuré de telle manière qu'une section du parcours de consigne (W) soit fixée ou puisse être fixée, dans laquelle le parcours de consigne (W) présente au moins deux points d'inflexion (K), les au moins deux points d'inflexion (K) étant des points d'appui de la courbe d'interpolation (I).

9. Engin de chantier autopropulsé selon l'une des revendications 1 à 8, **caractérisé en ce que** l'unité de saisie (11) et l'unité d'affichage (12) du dispositif de modélisation de parcours (10) comportent un écran (14) sensible au toucher et/ou un écran avec un appareil de saisie, en particulier une souris d'ordinateur.

10. Engin de chantier autopropulsé selon l'une des revendications 1 à 9, **caractérisé en ce que** l'engin de chantier autopropulsé (1) est un finisseur à coffrage glissant, dans lequel le dispositif de travail présente un dispositif (6) pour la formation de matériau coulant, ou est une fraiseuse de route, dans lequel le dispositif de travail présente un rouleau de fraisage ou de coupe.

11. Procédé de commande d'un engin de chantier autopropulsé (1) qui présente un châssis d'engin (2), un dispositif d'entraînement pour l'entraînement de l'engin de chantier de sorte qu'un point de référence (R) sur l'engin de chantier réalise des mouvements de translation et/ou rotatifs, et un dispositif de travail agencé au niveau du châssis d'engin (2) pour l'élévation de corps structurels sur un terrain ou pour la modification du terrain, le dispositif d'entraînement étant commandé de telle manière qu'un point de référence (R) sur l'engin de chantier se déplace le long d'un parcours (W),
**caractérisé en ce que**
les étapes de procédé suivantes sont réalisées par un dispositif de modélisation de parcours (10) :
la position au moins d'un point d'inflexion (K) sur le parcours de consigne (W) est déterminée,
au moins une partie du parcours de consigne (W) est affichée, dans laquelle le parcours de consigne présente le point d'inflexion (K),
dans l'au moins une partie du parcours de consigne (W), une section (C) est fixée, dans laquelle le parcours de consigne présente le point d'inflexion (K),
pour la section du parcours de consigne (W), dans laquelle le parcours de consigne présente le point d'inflexion (K), une courbe d'interpolation (I) est calculée, et
pour la détermination d'un parcours modélisé (W_{M}) la section (C) du parcours de consigne (W), dans laquelle le parcours de consigne présente le point d'inflexion (K), est remplacée par la courbe d'interpolation (I) de sorte que le point de référence (R) sur l'engin de chantier se déplace le long du parcours modélisé (W_{M}).

12. Procédé de commande d'un engin de chantier autopropulsé selon la revendication 11, **caractérisé en ce que** la dérivée côté gauche et la dérivée côté droit sont calculées par le dispositif de modélisation de parcours (10) en un point du parcours de consigne (W), et que la dérivée côté gauche et la dérivée côté droit sont comparées au point du parcours de consigne (W) entre elles, dans lequel il est conclu à la présence d'un point d'inflexion et/ou à la force d'inflexion sur la base de la différence entre la dérivée côté gauche et côté droit.

13. Procédé de commande d'un engin de chantier autopropulsé selon la revendication 11 ou 12, **caractérisé en ce que** par le dispositif de modélisation de parcours (10) pour la fixation de la section (C) du parcours de consigne (W) un premier point d'appui (S₁) et un deuxième point d'appui (S₁, S₂), entre lesquels la section (C) du parcours de consigne (W) se trouve, sont fixés sur le parcours, dans lequel pour la section (C) du parcours de consigne (W), dans laquelle le parcours de consigne présente le point d'inflexion (K), une courbe d'interpolation lisse (I) est calculée, laquelle passe au niveau des points d'appui (S₁, S₂) sans point d'inflexion en parcours de consigne.

14. Procédé de commande d'un engin de chantier autopropulsé selon la revendication 13, **caractérisé en ce que** par le dispositif de modélisation de parcours (10) dans la section (C) du parcours de consigne (W) un troisième point d'appui (S₃) est fixé, dans lequel pour la section (C) du parcours de consigne (W), dans laquelle le parcours de consigne présente le point d'inflexion (K), une courbe d'interpolation lisse (I) est calculée, laquelle passe à travers le troisième point d'appui (S₃).

15. Procédé de commande d'un engin de chantier autopropulsé selon la revendication 14, **caractérisé en ce que** le troisième point d'appui (S₃) est le point d'inflexion (K) calculé.

16. Procédé de commande d'un engin de chantier autopropulsé selon l'une des revendications 11 à 15, **caractérisé en ce que** les points d'appui (S₁, S₂, S₃) sont des points d'appui prédéfinis ou sélectionnables par l'utilisateur.

17. Procédé de commande d'un engin de chantier autopropulsé selon l'une des revendications 11 à 16, **caractérisé en ce que** par l'intermédiaire du dispositif de modélisation de parcours (10) une section (C) du parcours de consigne (W) est fixée ou peut être fixée, dans laquelle le parcours de consigne (W) présente au moins deux points d'inflexion (K), les au moins deux points d'inflexion (K) étant des points d'appui de la courbe d'interpolation (I).
